# EUROPEAN PATENT SPECIFICATION

(11) **EP 1 268 949 B1**
(45) Date of publication and mention of the grant of the patent: **26.12.2012**
(21) Application number: 01914031.8
(22) Date of filing: 22.03.2001
(51) Int. Cl.: E02B 8/02, B01D 29/07

(54) **UP-FLOW RAKE BAR SCREEN**
ÜBERLAUFSIEBRECHEN
GRILLE A BARREAUX

(30) Priority: 03.04.2000 GB 0008055
(43) Date of publication of application: 02.01.2003
(73) Proprietor: Eimco Water Technologies (Municipal) limited, West Bromwich West Midlands B70 7JF (GB)
(72) Inventor: FROUD, David, P., Kent ME15 0QH (GB)
(74) Representative: Carpmael, Robert Maurice Charles
(86) International application number: PCT/GB2001/001273
(87) International publication number: WO 2001/075240

(56) References cited:
- EP-A- 0 582 542
- WO-A-98/31882
- DE-A- 19 755 588
- GB-A- 2 267 446
- US-A- 4 097 382

## Description

The present invention relates to an up-flow rake bar screen assembly according to the preamble of claim 1.

WO 98/31882 and EP 0582542 A1 each describe a screen provided with a multiplicity of blades which extend between straight parallel bars and which are moved longitudinally therealong by drive means to and fro to shift debris out of the spaces between the bars thereby to ensure that an adequate through-flow of the sewage is maintained.

DE 19755588 A1 describes a screen, in which the rake is moved about a pivot axis so that parts of it sweep about bars which are part circular.

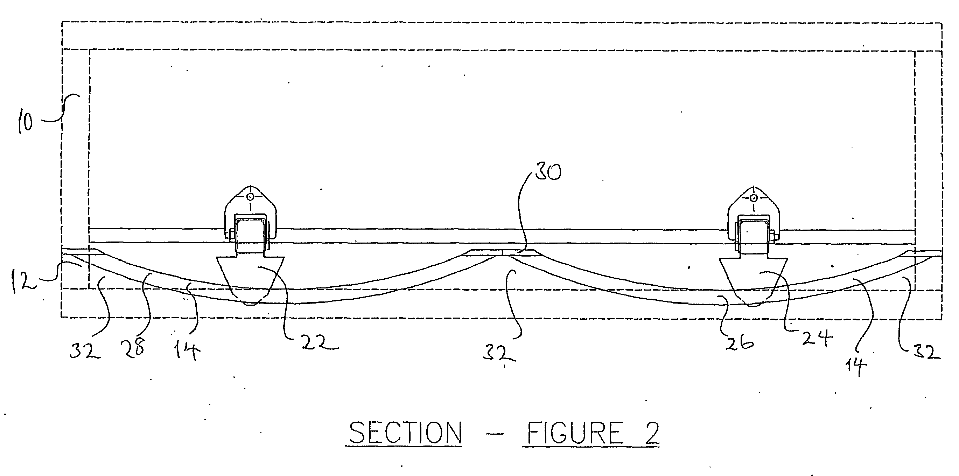

Document W09831882 is considered to represent the most relevant state of the art; this document discloses an up-flow rake bar screen assembly comprising an up-flow rake bar screen having a multiplicity of bars which are parallel to one another and which are spaced from one another across the screen, together with a rake having a multiplicity of blades which extend between the bars of the screen, in which the rake is provided with drive means to move the blades to and fro longitudinally of the bars, in which at least a portion of each bar is configured so that, when viewed from a position at which, when the screen is in use, fluid has not yet passed through the screen, that portion of the bar is convex, wherein the rake is track guided, and in that the drive means are arranged above the screen and the rake extends downwardly from the drive means, and wherein each bar has at least two portions spaced apart longitudinally of the bar with voids or pockets provided at the ends of the portions, which in use are configured to accommodate debris or screenings, and wherein the blades are configured in use to move debris or screenings which are trapped between the bars into said voids or pockets. The bars disclosed in Fig.2 of document W09831882 (reference sign 10) are not to be considered curved: the bars at their ends are upturned at an angle (see W09831882, page 3, second paragraph, line 1 and 2).

Document W09831882 does not disclose that each bar has at least two curves spaced apart longitudinally of the bar.This particular shape of each bar enables to reduce the resistance to flow caused by the screen and an increased size of the pockets for the temporary collection of material.

Document US5755958A describes a device designed to remove material from a flow via a conveyancing device. This document discloses the use of a vertical grate screen and rotating arm system in combination with a conveyancing device as a waste removal system. The vertical grate screen is formed by a plurality of grating bars extending half the circumference of a surface of a cylinder, said grating bars being positioned with their convex side in opposite direction to the flow direction (see US5755958A, column 6, lines 24-35). In one embodiment, this document describes the possibility of positioning two units for depositing material on its grating surfaces in conjunction with a single conveying device. In this case the conveying device is located in the middle, and the removing beams of the two units are rotated in opposite directions so that both units gather and convey the material from the grating surfaces in direction to the conveying device (see US5755958A, Fig.5; column 8, lines 42-49).

The design features of the devices disclosed, respectively, in W09831882 and in US5755958A, are mutually incompatible. In particular, the rotating removing beam disclosed in US5755958A is incompatible with the teeth disclosed in W09831882, which go back and forward.

Une disadvantage of screens with straight bars is their relatively low strength and stability of the bars.

The present invention seeks to provide a remedy.

Accordingly, the present invention is directed to an up-flow rake bar screen having the construction set out in claim 1.

The curvature of the bars increases their strength to resist the forces to which they are subjected in storm conditions, and also provides voids or pockets at the ends of the curves where the debris, or screenings can be accommodated until the storm conditions subside. The curvature on the bars also increases the effective area of the screen.

Preferably, the cross-section of each bar is a rectangle, but other cross-sections are possible such as square sections, truncated triangular sections, or even round sections.

The bars may be so formed as to have a tapering cross-section, in which case the tapering is preferably in an intended downward direction, although it may be in an intended upward direction. Either way, such a construction reduces the likelihood of jamming of the rakes and also reduces the amount of friction between the rakes and the bars. Wire is readily available which has such features.

If the bars have a tapered cross-section, the extent to which they will wear the rakes can be reduced by having the corners where the side faces of each bar meet its top surface, rounded. It is preferable to have the upper corners rounded if the cross-section of the bar is rectangular or square.

The rakes may each be provided with flat blades which extend between the bars.

The blades may be tapered in an intended downward direction.

Preferably, the blades have rounded lowermost ends.

Each bar may have at least two curves spaced apart longitudinally of the bar with voids or open spaces or pockets provided at the ends of the curves.

Each bar may be curved everywhere along its length.

Instead, each bar may have a straight portion between two curved portions of the bar. The progress between a curved portion and the straight portion may be without discontinuity, so that there is a smooth transition from a straight portion to a curved portion. The curved portions may be at the respective ends of the bar.

In another construction of bar, it may be curved in a central portion thereof, with its end portions being straight.

The present invention extends to a sewage system overflow installation comprising an up-flow rake bar screen assembly in accordance with the present invention.

The present invention also extends to a method of filtering sewage during storm overflow conditions as claimed in claim 16 bar

An example of an up-flow rake bar screen assembly made in accordance with the present invention is illustrated in the accompanying drawings, in which:
- Figure 1: shows a plan view of the screen assembly;
- Figure 2: shows a side view of the rake bar screen assembly shown in Figure 1;
- Figure 3: shows an end view of the rake bar screen assembly shown in Figures 1 and 2;
- Figure 4: shows on a larger scale component parts of the screen assembly shown in Figures 1 to 3; ..
- Figure 5: shows on a larger scale a cross-sectional view of one of the bars of the screen assembly shown in Figures 1 to 3;
- Figure 6: shows on a smaller scale an end view of a sewage system overflow installation including a screen assembly as shown in Figures 1 to 3; and
- Figure 7: shows a plan view of the installation shown in Figure 6.

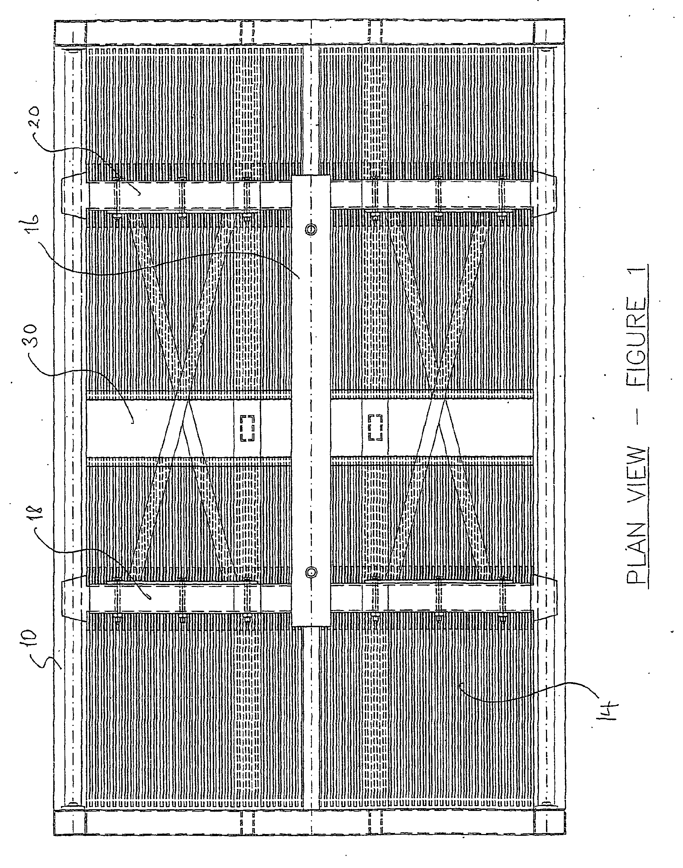

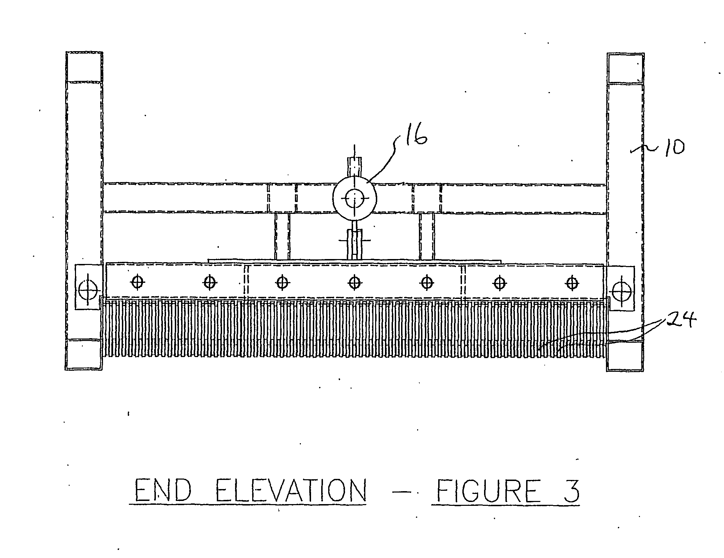

The up-flow rake bar screen 10 shown in Figures 1 to 3 comprises a generally rectangular frame 12, across which, parallel to the longer sides, extends a multiplicity of bars 14 which are all parallel to one another and uniformly spaced apart in the direction of the shorter sides of the frame 12. Also mounted on the frame 10 are drive means 16 and two rakes 18 and 20 guided by tracks and interconnected by a strut. Each rake 18 and 20 is provided with a multiplicity of blades 22 and 24 spaced apart in a direction parallel to the shorter lengths of the frame 12, with one blade for each space between the bars 14. The drive means 16 is arranged to move the rakes 18 and 20, and with them the blades 22 and 24 to and fro longitudinally of the bars 14.

Each bar 14 is formed with two successive arcuate portions 26 and 28 spaced apart along its length. Each arcuate portion 26 or 28 is curved so as to be convex as viewed from a position at which, when the screen is in use, fluid has not yet passed through the screen. 'The centre portions of the bars, between their respective arcuate portions, are supported by a central strut 30 of the frame 12.

It will thereby be seen that voids or pockets 32 are defined at positions between and at the outer ends of the arcuate portions 26 and 28.

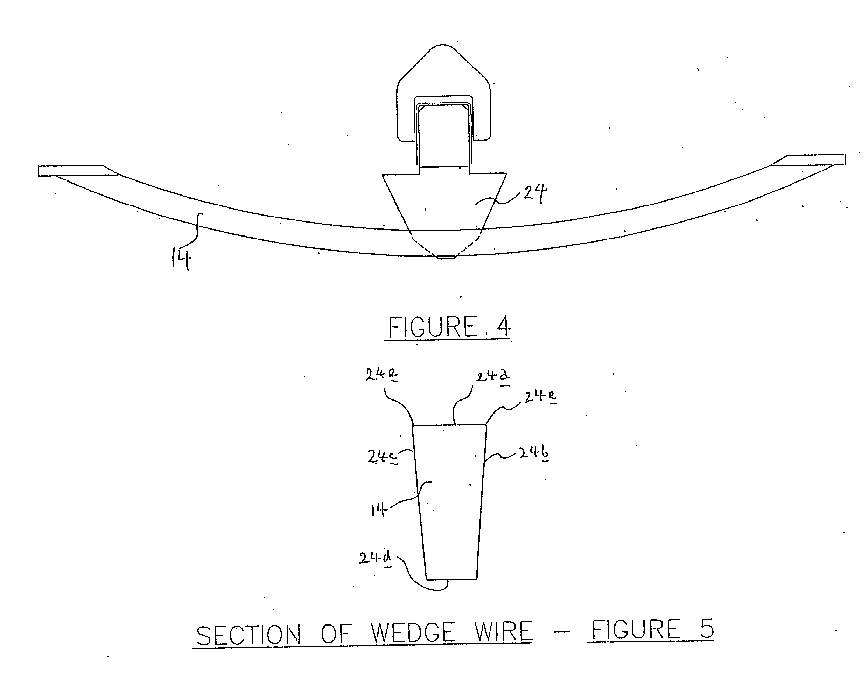

Each bar 14 comprises a strip of bar having a rectangular, square, round or wedge-shaped cross-section, as shown in Figure 5. Thus the section of each bar 14 may comprise an inverted truncated triangle, with an upper horizontal boundary 24a, two side boundaries 24b and 24c which extend downwardly from the upper boundary 24a and converge towards a lower horizontal boundary 24d.
The corners 24e between the upper boundary 24a and the side boundaries 24b and 24c are rounded, to reduce friction between the bars 14 and the rakes 18 and 20. It would also be preferable for the corresponding corners to be rounded in the case of rectangular or square sectioned bar.

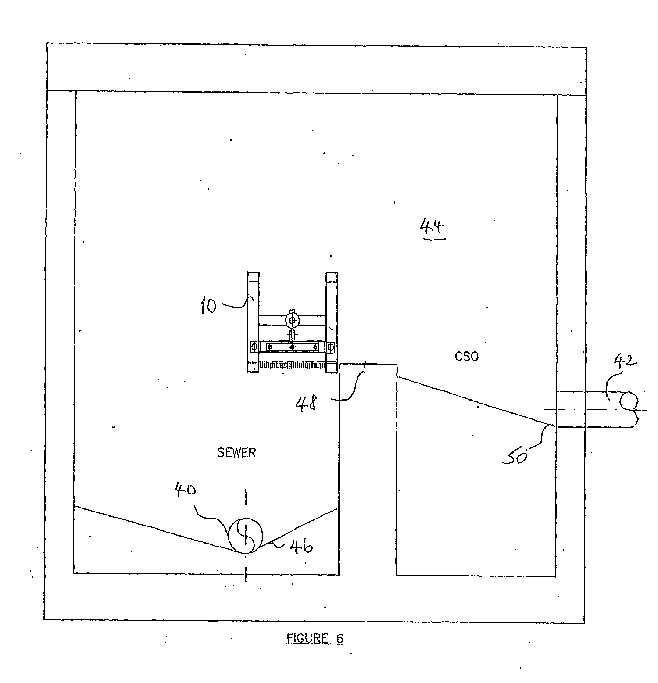

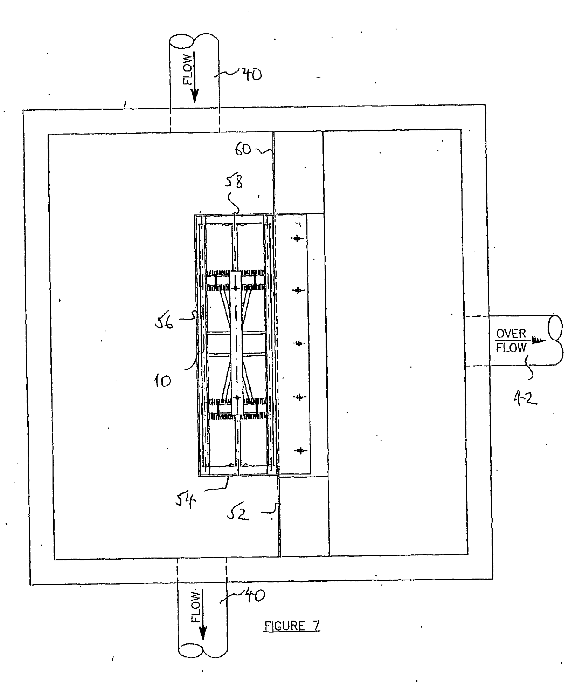

The manner in which a screen, as shown in Figures 1 to 3, may be installed is shown in Figures 6 and 7. In these Figures, there are shown a main sewer pipe 40, a storm overflow pipe 42, and a storm overflow chamber 44. The sewer 40 is connected to opposite ends of the chamber 44, at the bottom of that chamber. A passageway for the sewage as it passes through the chamber 44 is provided at the bottom thereof by a channel 46. Extending parallel to this channel and to one side thereof is a storm overflow weir 48, which extends generally parallel to the channel 46.

Along the bottom of the chamber 44 and generally parallel to the weir 48, on the side thereof opposite to that of the channel 46 is a further channel 50 which communicates with the storm overflow pipe 42.

A screen 10 as shown in Figures 1 to 3 is secured to that side of the weir 48 on which channel 46 extends. The screen 10 is held in place by means of brackets or other fastenings (not shown), and is oriented so that the bars 14 run generally horizontally and generally parallel to the channels 46 and 50.

Vertically extending side plates 52, 54, 56, 58 and 60 extend upwardly from the weir 48 and around the sides of the frame 12.

When the installation shown in Figures 6 and 7 is in use, under normal conditions sewage flows through the sewer 40 including the channel 46 where it flows through the chamber 44. In the event of storm conditions, so that the sewage level rises, its level may ultimately rise above the top of the weir 48. In these conditions, there is an upward component of the flow through the screen 10 between the bars 14 and then a sideways flow out and over the weir 48 into the channel 50 and away through the sewage storm overflow pipe 42. Whilst this occurs, the drive means 16 operate to move the blades 22 and 24 to and fro longitudinally of the bars 14. In doing this, the blades 22 and 24 shift the debris or screenings which are trapped between the bars 14 into the pockets 32.

The convex curvature of each bar, as viewed from a position at which fluid has not yet passed through the screen, strengthens the bar against the forces exerted on it by the storm flow.

When the storm subsides, and the level of water in the chamber 44 drops, the debris or screenings are then free to fall away from the pockets 32 and ultimately be carried along the channel 46 and out in the sewer.

During this process, it will be appreciated that the side wall of the weir 48, and the opposite side wall of the chamber 44 effectively define a shaft for the up-flow of sewage from the channel 46 to the top of the weir 48.

Numerous variations and modifications to the illustrated screen assembly and installation may occur to the reader without taking the resulting construction outside the scope of the appended claims. For example, the screen may be installed so that its bars 14 are perpendicular to the weir 48 rather than parallel to it. Each bar of the screen may have three or more arcuate portions, each provided with a respective rake.

As already stated, the convex arcuate shape of each bar 14 strengthens it against the forces of storm flow. This enables less material to be used for each bar 14 to give it the required strength, which effectively increases the total space available between bars 14 for storm flow, so as to reduce the resistance to flow by the screen 10. It also increases the effective size of the pockets 32.

Another aspect of the present invention is directed to an up-flow rake bar screen having a multiplicity of bars which are parallel to one another and which are spaced from one another across the screen, in which the bars are each so formed as to have a tapering cross-section.

## Claims

1. An up-flow rake bar screen assembly comprising an up-flow rake bar screen (10) having a multiplicity of bars (14) which are parallel to one another and which are spaced from one another across the screen (10), together with a rake (18 or 20) having a multiplicity of blades (22 or 24) which extend between the bars (14) of the screen (10), in which the take (18 or 20) is provided with drive means (16) to move the blades (22 or 24) to and fro longitudinally of the bars (14), in which at least a portion of each bar (14) is configured so that, when that portion is viewed from a position at which, when the screen is in use, fluid has not yet passed through the screen (10), that portion of the bar (14) is convex, wherein the rake (18 or 20) is track guided, and in that the drive means (16) are arranged above the screen (10) and the rake (18 or 20) extends downwardly from the drive means (16), and wherein, each bar (14) has at least two portions spaced apart longitudinally of the bar (14) with voids or pockets (32) provided at the ends of the portions, which in use are configured to accommodate debris or screenings, and wherein the blades (22, 24) are configured in use to move debris or screenings which are trapped between the bars (14) into said voids or pockets (32), **characterised in that** the at least two portion spaced apart longitudinally of the bar are configured as curves.

2. An up-flow rake bar screen assembly according to claim 1, **characterised in that** the bars (14) are each so formed as to have a rectangular cross-section.

3. An up-flow rake bar screen assembly according to claim 1, **characterised in that** the bars (14) are so formed as to have a tapering cross-section.

4. An up-flow rake bar screen assembly according to claim 3, **characterised in that** the tapering is in a downward direction.

5. An up-flow rake bar screen assembly according to claim 3 or claim 4, charaterised in that the bars are made of wire.

6. An up-flow rake bar screen assembly according to any one of claims 3 to 5, **characterised in that** the cross-section of each bar (14) is a truncated triangle.

7. An up-flow rake bar screen assembly according to any one of claims 2 to 6, **characterised in that** the corners (24(e)) of each bar (14) at the upper end of its cross section are rounded.

8. An up-flow rake bar screen assembly according to any one of claims 1 to 7, **characterised in that** each bar (14) is curved everywhere along its length.

9. An up-flow rake bar screen assembly according to any one of claims 1 to 7, **characterised in that** each bar (14) has a straight portion between two curved portions of the bar (14).

10. An up-flow rake bar screen assembly according to claim 9, **characterised in that** the progress between a curved portion and the straight portion is without discontinuity, so that there is a smooth transition from the straight portion to each curved portion.

11. An up-flow rake bar screen assembly according to claim 9 or claim 10, **characterised in that** the curved portions are at the respective ends of the bar (14).

12. An up-flow rake bar screen assembly according to any one of claims 1 to 7, **characterised in that** each bar (14) is curved in a central portion thereof, with its end portions being straight.

13. An up-flow rake bar screen assembly according to any preceding claim, **characterised in that** the blades (22 or 24) are tapered in a downward direction.

14. An up-flow rake bar screen assembly according to any preceding claim, **characterised in that** the blades (22 or 24) have rounded lowermost ends.

15. A sewage system overflow installation comprising an assembly in accordance with any preceding claim.

16. A method of filtering sewage during storm overflow conditions in which the sewage is passed through an up-flow rake bar screen (10) comprising a multiplicity of bars (14) which are parallel to one another and which are spaced from one another across the screen (10), at least portions of the bars (14) being configured so that those portions are convex to the approaching sewage, and moving a rake (18 or 20) having a multiplicity of blades (22 or 24) which extend between the bars (14) of the screen (10) so that the blades (22 or 24) move to and fro longitudinally of the bars (14), wherein the rake (18 or 20) is guided by track, and in that the rake (18 or 20) is moved by drive means (16) arranged above the screen (10) and the rake (18 or 20) extends downwardly from the drive means (16), wherein each bar (14) has at least two portions spaced apart longitudinally of the bar (14) with voids or pockets (32) provided at the ends of the portions, which in use are configured to accommodate debris or screenings, and wherein the blades (22, 24) are configured in use to move debris or screenings which are trapped between the bars (14) into said voids or pockets (32), said at least two portions being configured as curves.

## Patentansprüche

1. Überlaufsiebrechenbaugruppe, die einen Überlaufsiebrechen (10) mit einer Vielzahl von Stäben (14) aufweist, die parallel zueinander sind, und die über das Sieb (10) voneinander beabstandet sind, zusammen mit einem Rechen (18 oder 20) mit einer Vielzahl von Schaufeln (22 oder 24), die sich zwischen den Stäben (14) des Siebes (10) erstrecken, wobei der Rechen (18 oder 20) mit einer Antriebseinrichtung (16) versehen ist, um die Schaufeln (22 oder 24) in Längsrichtung der Stäbe (14) hin- und herzubewegen, wobei mindestens ein Abschnitt eines jeden Stabes (14) so ausgebildet ist, dass, wenn jener Abschnitt aus einer Position betrachtet wird, in der, wenn das Sieb benutzt wird, Fluid noch nicht durch das Sieb (10) hindurch gegangen ist, jener Abschnitt des Stabes (14) konvex ist, wobei der Rechen (18 oder 20) in einer Spur geführt wird, und dass die Antriebseinrichtung (16) über dem Sieb (10) angeordnet ist und sich der Rechen (18 oder 20) von der Antriebseinrichtung (16) nach unten erstreckt, und wobei jeder Stab (14) mindestens zwei Abschnitte, die in Längsrichtung des Stabes (14) voneinander beabstandet sind, mit Hohlräumen oder Vertiefungen (32) aufweist, die an den Enden der Abschnitte vorhanden sind, die ausgebildet sind, um bei Benutzung Schwemmgut oder Feinmüll aufzunehmen, und wobei die Schaufeln (22, 24) ausgebildet sind, um bei Benutzung Schwemmgut oder Feinmüll, das zwischen den Stäben (14) eingeschlossen ist, in die Hohlräume oder Vertiefungen (32) zu bewegen, **dadurch gekennzeichnet, dass** die mindestens zwei Abschnitte, die in Längsrichtung des Stabes voneinander beabstandet sind, als Kurven ausgebildet sind.

2. Überlaufsiebrechenbaugruppe nach Anspruch 1, **dadurch gekennzeichnet, dass** die Stäbe (14) jeweils so ausgebildet sind, dass sie einen rechteckigen Querschnitt aufweisen.

3. Überlaufsiebrechenbaugruppe nach Anspruch 1, **dadurch gekennzeichnet, dass** die Stäbe (14) so ausgebildet sind, dass sie einen sich verjüngenden Querschnitt aufweisen.

4. Überlaufsiebrechenbaugruppe nach Anspruch 3, **dadurch gekennzeichnet, dass** sich die Verjüngung in einer Richtung nach unten erstreckt.

5. Überlaufsiebrechenbaugruppe nach Anspruch 3 oder Anspruch 4, **dadurch gekennzeichnet, dass** die Stäbe aus Draht bestehen.

6. Überlaufsiebrechenbaugruppe nach einem der Ansprüche 3 bis 5, **dadurch gekennzeichnet, dass** der Querschnitt eines jeden Stabes (14) ein abgeflachtes Dreieck ist.

7. Überlaufsiebrechenbaugruppe nach einem der Ansprüche 2 bis 6, **dadurch gekennzeichnet, dass** die Ecken (24(e)) eines jeden Stabes (14) am oberen Ende ihres Querschnittes abgerundet sind.

8. Überlaufsiebrechenbaugruppe nach einem der Ansprüche 1 bis 7, **dadurch gekennzeichnet, dass** ein jeder Stab (14) entlang seiner Länge überall gebogen ist.

9. Überlaufsiebrechenbaugruppe nach einem der Ansprüche 1 bis 7, **dadurch gekennzeichnet, dass** jeder Stab (14) einen geradlinigen Abschnitt zwischen zwei gebogenen Abschnitten des Stabes (14) aufweist.

10. Überlaufsiebrednenbaugruppe nach Anspruch 9, **dadurch gekennzeichnet, dass** der Verlauf zwischen einem gebogenen Abschnitt und einem geradlinigen Abschnitt ohne Diskontinuität ist, so dass ein gleichmäßiger Übergang vom geradlinigen Abschnitt zu einem jeden gebogenen Abschnitt vorhanden ist.

11. Überlaufsiebreehenbaugruppe nach Anspruch 9 oder Anspruch 10, **dadurch gekennzeichnet, dass** die gebogenen Abschnitte an den jeweiligen Enden des Stabes (14) sind.

12. Überlaufsiebrechenbaugruppe nach einem der Ansprüche 1 bis 7, dadurch gekenntzeichnet, dass ein jeder Stab (14) in einem mittleren Abschnitt davon gebogen ist, wobei seine Endabschnitte geradlinig sind.

13. Überlaufsiebrechenbaugruppe nach einem der vorergehenden Ansprüche, **dadurch gekennzeichnet, dass** die Schaufeln (22 oder 24) in einer Abwärtsrichtung verjüngt sind.

14. Überlaufsiebrechenbaugruppe nach einem der vorhergehenden Ansprüche, **dadurch gekennzeichnet, dass** die Schaufeln (22 oder 24) abgerundete unterste Enden aufweisen.

15. Überlaufinstallation einer Schmutzwasserkanalisation, die eine Baugruppe nach einem der vorhergehenden Ansprüche aufweist.

16. Verfahren zum Filtern von Schmutzwasser bei Überlaufverhältnissen während eines Sturmes, wobei das Schmutzwasser durch einen Überlaufsiebrechen (10) geführt wird, der eine Vielzahl von Stäben (14) aufweist, die parallel zueinander sind, und die über das Sieb (10) voneinander beabstandet sind, wobei mindestens Abschnitte der Stäbe (14) so ausgebildet sind, dass jene Abschnitte für das sich nähernde Schmutzwasser konvex sind, und wobei ein Rechen (18 oder 20) mit einer Vielzahl von Schaufeln (22 oder 24), die sich zwischen den Stäben (14) des Siebes (10) erstrecken, so bewegt wird, dass sich die Schaufeln (22 oder 24) in Längsrichtung der Stäbe (14) hin- und herbewegen, wobei der Rechen (18 oder 20) mittels einer Spur geführt wird, und wobei der Rechen (18 oder 20) mittels einer Antriebseinrichtung (16) bewegt wird, die über dem Sieb (10) angeordnet ist, und sich der Rechen (18 oder 20) nach unten von der Antriebseinrichtung (16) erstreckt, wobei ein jeder Stab (14) mindestens zwei Abschnitte, die in Längsrichtung des Stabes (14) voneinander beabstandet sind, mit Hohlräumen oder Vertiefungen (32) aufweist, die an den Enden der Abschnitte vorhanden sind, die ausgebildet sind, um bei Benutzung Schwemmgut oder Feinmüll aufzunehmen, und wobei die Schaufeln (22, 24) ausgebildet sind, um bei Benutzung Schwemmgut oder Feinmüll, das zwischen den Stäben (14) eingeschlossen wird, in die Hohlräume oder Vertiefungen (32) zu bewegen, wobei die mindestens zwei Abschnitte als Kurven ausgebildet sind.

## Revendications

1. Assemblage de grille à barreaux à râteau à courant ascendant, comprenant une grille à barreaux à râteau à courant ascendant (10), comportant de multiples barreaux (14) parallèles les uns aux autres et espacés les uns des autres à travers la grille (10), ensemble avec un râteau (18 ou 20), comportant de multiples lames (22 ou 24), s'étendant entre les barreaux (14) de la grille (10), le râteau (18 ou 20) comportant des moyens d'entraînement (16) pour déplacer les lames (22 ou 24) par un mouvement de va-et-vient, longitudinalement par rapport aux barreaux (14), au moins une partie de chaque barreau (14) étant configurée de sorte que lorsque cette partie est vue à partir d'une position au niveau de laquelle, lors de l'utilisation de la grille, le fluide n'est pas encore passé à travers la grille (10), cette partie du barreau (14) est convexe, le râteau (18 ou 20) étant guidé dans des glissières et les moyens d'entraînement (16) étant agencés au-dessus de la grille (10), le râteau (18 ou 20) s'étendant vers le bas à partir des moyens d'entraînement (16), chaque barreau (14) comportant au moins deux parties espacées longitudinalement par rapport au barreau (14), avec des vides ou des poches (32), agencés au niveau des extrémités des parties configurées en service de sorte à recevoir les débris ou les criblures, les lames (22, 24) étant configurées en service de sorte à déplacer les débris ou les criblures piégés entre les barreaux (14) dans lesdits vides ou lesdites poches (32), **caractérisé en ce qu'**au moins deux parties espacées longitudinalement par rapport au barreau sont configurées sous forme de courbes.

2. Assemblage de grille à barreaux à râteau à courant ascendant selon la revendication 1, **caractérisé en ce que** les barreaux (14) sont chacun formés de sorte à avoir une section transversale rectangulaire.

3. Assemblage de grille à barreaux à râteau à courant ascendant selon la revendication 1, **caractérisé en ce que** les barreaux (14) sont formés de sorte à avoir une section transversale effilée.

4. Assemblage de grille à barreaux à râteau à courant ascendant selon la revendication 3, **caractérisé en ce que** l'effilement s'étend dans une direction allant vers le bas.

5. Assemblage de grille à barreaux à râteau à courant ascendant selon les revendications 3 ou 4, **caractérisé en ce que** les barreaux sont composés de fil métallique.

6. Assemblage de grille à barreaux à râteau à courant ascendant selon l'une quelconque des revendications 3 à 5, **caractérisé en ce que** la section transversale de chaque barreau (14) forme un triangle en tronc de cône.

7. Assemblage de grille à barreaux à râteau à courant ascendant selon l'une quelconque des revendications 2 à 6, **caractérisé en ce que** les coins (24(e)) de chaque barreau (14) au niveau de l'extrémité supérieure de sa section transversale sont arrondis.

8. Assemblage de grille à barreaux à râteau à courant ascendant selon l'une quelconque des revendications 1 à 7, **caractérisé en ce que** chaque barreau (14) est courbé partout le long de sa longueur.

9. Assemblage de grille à barreaux à râteau à courant ascendant selon l'une quelconque des revendications 1 à 7, **caractérisé en ce que** chaque barreau (14) comporte une partie droite entre deux parties courbées du barreau (14).

10. Assemblage de grille à barreaux à râteau à courant ascendant selon la revendication 9, **caractérisé en ce que** la progression entre une partie courbée et la partie droite ne comporte pas de discontinuité, de sorte qu'il existe une transition lisse entre la partie droite et chaque partie courbée.

11. Assemblage de grille à barreaux à râteau à courant ascendant selon les revendications 9 ou 10, **caractérisé en ce que** les parties courbées sont agencées au niveau des extrémités respectives du barreau (14).

12. Assemblage de grille à barreaux à râteau à courant ascendant selon l'une quelconque des revendications 1 à 7, **caractérisé en ce que** chaque barreau (14) est courbé dans sa partie centrale, ses parties d'extrémité étant droites.

13. Assemblage de grille à barreaux à râteau à courant ascendant selon l'une quelconque des revendications précédentes, **caractérisé en ce que** les lames (22 ou 24) sont effilées dans une direction allant vers le bas.

14. Assemblage de grille à barreaux à râteau à courant ascendant selon l'une quelconque des revendications précédentes, **caractérisé en ce que** les lames (22 ou 24) comportent des extrémités inférieures extrêmes arrondies.

15. Installation de trop-plein d'un système d'égout, comprenant un assemblage selon l'une quelconque des revendications précédentes.

16. Procédé de filtration des eaux usées dans des conditions de trop-plein d'orage, dans lequel les eaux usées sont passées à travers une grille à barreaux à râteau à courant ascendant (10), comprenant de multiples barreaux (14) parallèles les unes aux autres et espacées les unes des autres à travers la grille (10), au moins certaines parties des barreaux (14) étant configurées de sorte que ces parties sont convexes en direction de l'approche des eaux usées, un râteau (18 ou 20) comportant de multiples lames (22 ou 24) s'étendant entre les barreaux (14) de la grille (10), de sorte que les lames (22 ou 24) se déplacent par un mouvement de va-et-vient longitudinalement par rapport aux barreaux (14), le râteau (18 ou 20) étant guidé par une glissière, le râteau (18 ou 20) étant déplacé par des moyens d'entraînement (16) agencés au-dessus de la grille (10), le râteau (18 ou 20) s'étendant vers le bas à partir des moyens d'entraînement (16), chaque barreau (14) comportant au moins deux parties espacées longitudinalement par rapport au barreau (14), avec des vides ou des poches (32) agencés au niveau des extrémités des parties, configurés en service de sorte à recevoir les débris ou les criblures, les lames (22, 24) étant configurées de sorte à déplacer en service les débris ou les criblures piégés entre les barreaux (14) dans lesdits vides ou lesdites poches (32), lesdites au moins deux parties étant configurées sous forme de courbes.
